# EUROPÄISCHE PATENTANMELDUNG

(11) **EP 4 674 513 A1**
(43) Veröffentlichungstag der Anmeldung: **07.01.2026**
(21) Anmeldenummer: 24020220.0
(22) Anmeldetag: 02.07.2024
(51) Int. Cl.: B01D 53/78, B01D 53/86, B01D 53/56, F23J 15/00

(54) **VERFAHREN UND ANLAGE ZUR ENTFERNUNG VON STICKOXIDEN AUS EINEM GAS**

(71) Anmelder: Linde GmbH, 82049 Pullach (DE)
(72) Erfinder: Winkler, Florian, 82049 Pullach (DE); Zander, Hans-Jörg, 82049 Pullach (DE)
(74) Vertreter: Grundner, Sebastian

(57) **Zusammenfassung**

Es wird ein Verfahren zur Entfernung von Stickoxiden aus einem Gas vorgeschlagen, umfassend das Bereitstellen eines Stickoxide enthaltenden Ausgangsgases (2), das Unterwerfen des Ausgangsgases (2) einer katalytischen Oxidation (5) unter Erhalt eines an Stickstoffdioxid angereicherten Gases (3), wobei bei der katalytischen Oxidation Stickstoffmonoxid zu Stickstoffdioxid umgesetzt wird, und das Unterwerfen des angereicherten Gases (3) einer oxidativen Gaswäsche (8) unter Erhalt eines gewaschenen Gases (4). Eine entsprechende Anlage (13) wird ebenfalls vorgeschlagen.

## Beschreibung

Die vorliegende Offenbarung betrifft ein Verfahren und eine Anlage zur Entfernung von Stickoxiden aus einem Gas.

### Hintergrund

Der Sammelbegriff Stickoxide oder Stickstoffoxide bezeichnet unterschiedliche gasförmige Verbindungen, die aus den Atomen Stickstoff (N) und Sauerstoff (O) aufgebaut sind. Die relevantesten Stickoxide sind Stickstoffmonoxid (NO), Stickstoffdioxid (NO₂), (Di-)Stickstofftrioxid (N₂O₃) und (Di-)Stickstofftetroxid (N₂O₄). Stickoxide sind insbesondere Bestandteile von Rauch- oder Abgasen aus Verbrennungsprozessen.

Zur Entfernung von Stickoxiden aus Rauch- oder Abgasen ist eine Reihe von Verfahren bekannt. Bei diesen besteht weiterhin der Bedarf nach Verbesserungen, die dazu geeignet sind, bestimmte Nachteile, insbesondere hinsichtlich der Effizienz und/oder der Entfernungsrate, zu überwinden.

### Übersicht

Vor diesem Hintergrund werden ein Verfahren und eine Anlage mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren umfasst das Bereitstellen eines Stickoxide enthaltenden Ausgangsgases, das Unterwerfen des Ausgangsgases einer katalytischen Oxidation unter Erhalt eines gegenüber dem Ausgangsgas an Stickstoffdioxid angereicherten Gases, wobei bei der katalytischen Oxidation Stickstoffmonoxid zu Stickstoffdioxid umgesetzt wird, und das Unterwerfen des gegenüber dem Ausgangsgas an Stickstoffdioxid angereicherten Gases einer oxidativen Gaswäsche unter Erhalt eines gewaschenen Gases. Die angegebenen Verfahrensschritte sind in der angegebenen Reihenfolge vorgesehen.

Durch die stromauf der oxidativen Gaswäsche stattfindende katalytische Oxidation wird in dem vorgeschlagenen Verfahren der Anteil von Stickstoffdioxid im Gas erhöht. Hierdurch ist es möglich, einen ausreichend hohen Anteil von Stickstoffdioxid bereitzustellen, um eine höhere Auswaschrate bei der oxidativen Gaswäsche zu ermöglichen. Ferner ist durch die katalytische Oxidation in der Gasphase und dem daraus resultierenden höheren Anteil von Stickstoffdioxid im angereicherten Gas ein geringerer Partialdruck des Sauerstoffs bei der oxidativen Gaswäsche notwendig.

Es kann jedes technisch und funktional sinnvolle Verfahren zur katalytischen Oxidation bzw. oxidativen Gaswäsche verwendet werden. Entsprechende Verfahren werden auch im Zusammenhang mit Ausführungsformen des vorgeschlagenen Verfahrens weiter unten ausführlicher erläutert.

Das hier vorgeschlagene Verfahren und seine Ausgestaltungen haben den Vorteil, dass diese im Unterschied zu bekannten Verfahren nicht mehr nur auf Gase unter hohem Druck mit hohem Sauerstoffanteil (ca. 3 bis 6 Vol.-% Sauerstoff bei einem Druck größer als ca. 15 bar) beschränkt sind. Eine derartige Beschränkung resultiert in bekannten Verfahren daraus, dass bei niedrigeren Partialdrücken des Sauerstoffs die Oxidation von Stickstoffmonoxid zu Stickstoffdioxid ausgesprochen langsam erfolgt.

Das vorgeschlagene Verfahren und seine Ausgestaltungen lösen in diesem Zusammenhang ein zentrales Problem bekannter Verfahren, das insbesondere in der langsameren Oxidation von Stickstoffmonoxid zu Stickstoffdioxid gegenüber der schnelleren Absorption der Stickoxide Stickstoffdioxid, Stickstofftrioxid und Stickstofftetroxid besteht. Das vorgeschlagene Verfahren und seine Ausgestaltungen beseitigen daher die Limitationen bekannter Verfahren bei geringem Sauerstoffanteil, die herkömmlicherweise eine lange Verweilzeit des Stickstoffmonoxids erfordern.

Das vorgeschlagene Verfahren und seine Ausgestaltungen bieten auch Vorteile gegenüber bekannten Verfahren, die eine Oxidation des Stickstoffs zu Stickstofftetroxid unter Verwendung von Ozon umfassen. Derartige bekannte Verfahren unter Verwendung von Ozon sind technisch aufwendig und teuer im Betrieb.

Mit dem vorgeschlagenen Verfahren und seinen Ausgestaltungen lassen sich die typischerweise immer restriktiver werdenden regulatorischen Anforderungen bezüglich der Emissionen von Stickstoffmonoxid erfüllen.

In der Regel wird die katalytische Oxidation gerade für Kohlendioxid verwendet, nämlich um Kohlenwasserstoffe mit Restsauerstoff zu Kohlendioxid umzusetzen, um dessen Reinheit zu erhöhen. Eine solche katalytische Oxidation setzt allerdings, je nach Temperatur das Stickstoffmonoxid ebenfalls bis zum Gleichgewicht zu Stickstoffdioxid um. Nachdem die katalytische Oxidation ca. bis 400 °C betrieben wird, um Methan zu umzusetzen, wird gleichzeitig das Stickstoffmonoxid bis zum Gleichgewicht (bis ca. 50%) zu Stickstoffdioxid umgesetzt. Das ist eine ideale Voraussetzung für eine oxidative Wäsche, weil somit die Mehrheit der Stickoxide als Stickstofftrioxid (Stickstoffmonoxid plus Stickstoffdioxid) ausgewaschen wird. Das restliche Stickstoffmonoxid wird in der Wäsche dann zu löslichen Stickoxiden umgewandelt und ausgewaschen. Damit ergibt sich eine Effizienzsteigerung, wenn die katalytische Oxidation vor einer solchen Wäsche zum Einsatz kommt.

In einer Ausführungsform beträgt das Verhältnis von Stickstoffdioxid zu einem Gesamtgehalt an Stickoxiden in dem angereicherten Gas 20 bis 50% auf Volumen-, Masse- oder Molbasis. Stickstoffmonoxid ist in Wasser löslich. Stickstoffdioxid ist löslich und aus Stickstoffmonoxid und Stickstoffdioxid wird Stickstofftrioxid gebildet, das sogar noch schneller löslich ist als Stickstoffdioxid. Somit führt eine Oxidation bis 50% zu einer sehr effizienten Auswaschung von Stickstoffdioxid und simultan Stickstoffmonoxid in Form von Stickstofftrioxid. Das Verhältnis von Stickstoffdioxid zu dem Gesamtgehalt an Stickoxiden ist dabei der Quotient aus dem Anteil von Stickstoffdioxid an dem Gesamtgehalt an Stickoxiden im angereicherten Gas.

In einer Ausgestaltung des vorgeschlagenen Verfahrens wird die katalytische Oxidation in einem Temperaturbereich von 40 bis 400 °C, bei einem Druck von 10 bis 25 bar und einem Sauerstoffanteil von 0,5 bis 6 Vol.-% durchgeführt. Bei derartigen Verfahrensbedingungen zeigen sich die Vorteile des vorgeschlagenen Verfahrens in besonders ausgeprägter Weise.

Insbesondere kann für die oxidative Gaswäsche eine wässrige alkalische Lösung verwendet werden. Somit kann für die Gaswäsche auf bekannte und bewährte Verfahren zurückgegriffen werden. Das vorgeschlagene Verfahren und seine Ausgestaltungen ermöglichen daher insbesondere auch eine einfache und kostengünstige Nachrüstung existierender Anlagen bei Bedarf.

Insbesondere kann zur katalytischen Oxidation ein Festbettreaktor mit einem oxidativ wirkenden Katalysator verwendet werden.

Ein Sauerstoffanteil von 0,5 bis 6 Vol.-% entspricht ungefähr 5.000 ppm bis 60.000 ppm (Millionstel Anteile). Die erwähnten Prozessbedingungen für die katalytische Oxidation können eine vorteilhafte Möglichkeit darstellen, um einen hohen Anteil von Stickstoffdioxid im angereicherten Gas bereitzustellen.

Die katalytische Oxidation kann auch bei Drücken unter 15 bar und einem Sauerstoffanteil von weniger als 3 Vol.-% durchgeführt werden. Insbesondere können die Prozessbedingungen durch die Verwendung einer wässrigen alkalischen Lösung erreicht werden. Diese ist vorteilhaft hinsichtlich der Betriebskosten und effektiver Neutralisierung von sauren Gasen. Zur Herstellung einer wässrigen alkalischen Lösung kann insbesondere Ammoniak (NH₃) verwendet werden.

Die Verwendung eines Festbettreaktors kann eine hohe Auswaschrate sicherstellen. Außerdem müssen keine besonderen Maßnahmen für den Produktaustrag erfolgen und der Schritt der Filtration kann entfallen. Generell kann jeder oxidativ wirkende Katalysator verwendet werden, insbesondere ein auf Aluminiumoxid (Al₂O₃) geträgerter Katalysator, der zumindest eines der Elemente Platin (Pt) und Palladium (Pd) aufweist.

In einer weiteren Ausführungsform des vorgeschlagenen Verfahrens wird die oxidative Gaswäsche in einem Temperaturbereich von 10 bis 50 °C und bei einem Druck von 10 bis 25 bar durchgeführt.

Hierdurch kann eine hohe Auswaschrate erreicht werden und gleichzeitig der energetische Aufwand für das Erreichen der Prozessbedingungen geringgehalten werden, da die Temperatur und der Druck in einem moderaten Bereich liegen. Gemäß einer Ausführungsform des vorgeschlagenen Verfahrens wird das Ausgangsgas durch eine Vorwärmung erwärmt.

Hierdurch kann das Ausgangsgas erwärmt und die gewünschte Temperatur für die katalytische Oxidation bereitgestellt werden. Ferner kann hierdurch die Temperatur an verschiedene Prozessbedingungen angepasst und während des Prozesses geregelt werden. Für die Vorwärmung kann jede Wärmequelle, die eine Temperaturerhöhung des Ausgangsgases ermöglicht, verwendet werden.

Vorteilhafterweise wird das angereicherte Gas in eine Wärmeübertragungseinrichtung eingespeist, gekühlt und das Ausgangsgas wird durch die Wärmeübertragungseinrichtung erwärmt.

Hierdurch kann eine effektive Energienutzung ermöglicht werden. Das angereicherte Gas kann nach der katalytischen Oxidation eine hohe Temperatur aufweisen, wobei diese für die anschließende oxidative Gaswäsche durch den erfindungsgemäßen hohen Stickstoffdioxidanteil nicht notwendig ist. Das Ausgangsgas kann vorteilhafterweise für die katalytische Oxidation auf eine höhere Temperatur erwärmt werden. Insbesondere kann eine Ausgestaltung mit Wärmeübertragungseinrichtung, die der Vorwärmung vorgeschaltet ist, verwendet werden. Die Energiezufuhr der Vorwärmung kann durch die Wärmeübertragungseinrichtung so eingestellt werden, dass eine für die katalytische Oxidation optimale Temperatur einstellbar ist. Hierdurch kann der Energiebedarf optimiert werden. Alternativ kann die Wärmeübertragungseinrichtung auch der Vorwärmung nachgeschaltet sein.

Es ist möglich, dass eine Temperatur zur Durchführung der oxidativen Gaswäsche unter Verwendung einer direkten und/oder indirekten Kühlung regelbar ist.

Die Kühlung kann sowohl direkt als auch indirekt oder in Form einer Kombination von direkter und indirekter Kühlung erfolgen, wobei auch andere Kühlungskonzepte denkbar sind. In einer Ausgestaltung liegt die Temperatur für die oxidative Gaswäsche zwischen 10 und 50 °C. Das angereicherte Gas kann nach der katalytischen Oxidation eine höhere Temperatur aufweisen. Dieser Temperaturunterschied kann durch die Verwendung einer Wärmeübertragungseinrichtung reduziert werden. Dies kann sich, wie oben beschrieben, positiv auf den Energiebedarf für die katalytische Oxidation auswirken. Gleichzeitig kann dies auch vorteilhaft für den Energiebedarf für die oxidative Gaswäsche sein, da weniger Kühlungsenergie notwendig ist. Die Kühlung kann sicherstellen, dass der gewünschte Temperaturbereich für die oxidative Gaswäsche vorliegt.

Insbesondere kann das gewaschene Gas unter Erhalt von Kohlenstoffdioxid und Abgas einer Verflüssigung unterworfen werden, wobei das Abgas oder ein Teil hiervon dem Ausgangsgas beigemischt wird.

Hierdurch kann eine Erhöhung des Sauerstoffanteils des Ausgangsgases ermöglicht werden. Dies wirkt sich vorteilhaft auf die katalytische Oxidation aus. Die Beimischung mit dem Ausgangsgas kann bevorzugt stromauf der Vorwärmung und der Wärmeübertragungseinrichtung erfolgen. Auch andere Beimischungsstellen sind denkbar, können ggf. eine Anpassung der Temperaturregelung benötigen, damit das Ausgangsgas am Eintritt der katalytischen Oxidation die gewünschte Temperatur aufweist. Für die Kohlenstoffdioxidverflüssigung kann jedes dem Fachmann bekannte Verfahren verwendet werden.

Die vorgeschlagene Anlage zur Entfernung von Stickoxiden aus einem Gas ist dazu eingerichtet, ein Stickoxide enthaltendes Ausgangsgas bereitzustellen und unter Erhalt eines an Stickstoffdioxid angereicherten Gases einer katalytischen Oxidation zu unterwerfen, bei der Stickstoffmonoxid zu Stickstoffdioxid umgesetzt wird, und das angereicherte Gas unter Erhalt eines gewaschenen Gases einer oxidativen Gaswäsche zu unterwerfen.

Vorteile und Merkmale, die bezüglich des vorgeschlagenen Verfahrens beschrieben wurden, gelten auch für die vorgeschlagene Vorrichtung und umgekehrt. Diese werden entsprechend nur einmalig beschrieben.

Entsprechendes gilt auch für eine Anlage, die dazu eingerichtet sein kann, ein Verfahren gemäß einer beliebigen Ausgestaltung durchzuführen.

### Zeichnungen

Im Rahmen der vorliegenden Offenbarung vorgeschlagene Aspekte werden anhand der beiliegenden Zeichnung näher erläutert. Dabei zeigt

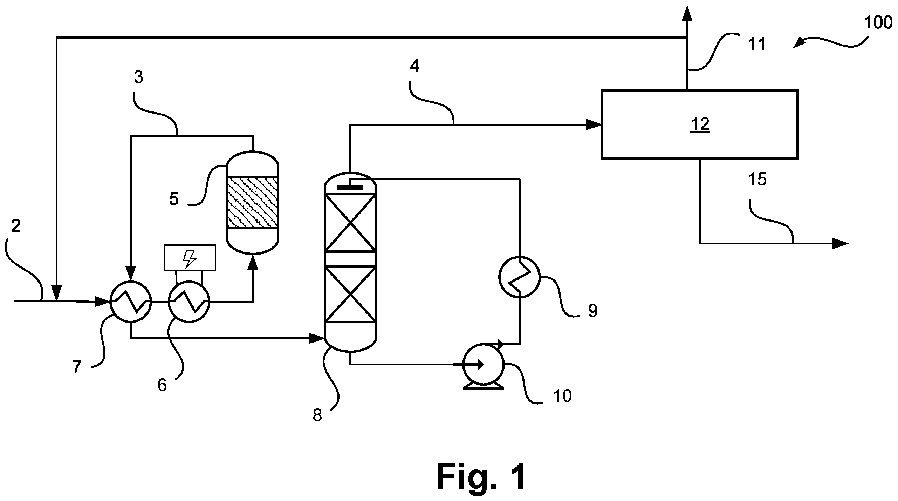

Figur 1 eine Anlage in Form eines Blockdiagramms.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Funktionen, Merkmale, Strukturen und/oder andere Aspekte nicht als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus diesen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende in ihrer Funktion einander entsprechende, baulich identische oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Sämtliche hier verwendete Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Element der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B, C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, die mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt verbleibt. Ein "Teil" kann auch nach einer Kombination beliebiger der vorstehenden benannten Schritte vorliegen, beispielsweise eines nach trenntechnischer Bearbeitung abgezweigten Anteils.

Hier vorgeschlagene Maßnahmen umfassen eine Kombination aus einer Kaltentstickung und einer katalytischen Oxidation, wobei vor einer Bezugnahme auf die hier vorgeschlagenen Ausgestaltungen der entsprechende technische Hintergrund erläutert werden soll.

Aus dem Artikel von F. Winkler et al., "Cold DeNOx development for oxyfuel power plants", International Journal of Greenhouse Gas Control 5S (2011) S231-S237 sind ein Verfahren und eine Anlage bekannt, die Abgase aus einem Verbrennungsprozess erst einer Rauchgasentschwefelung (Flue Gas Desulfurization) unterwerfen und anschließend komprimieren. Die Rauchgasentschwefelung dient primär der Entfernung von Schwefeloxiden (SOₓ). Die Kompression des sauerstoffhaltigen Rauchgases in der Oxyfuel-Technologie eliminiert die Notwendigkeit, Ozon zur Oxidation der Stickoxide zu verwenden und durch die Erhöhung des Drucks wird die Stickoxid-Oxidation eingeleitet. Dieser Vorgang wird als Autooxidation bezeichnet.

Anschließend wir das Gas einer Gaswäsche mittels eines Cold-DeNOₓ- bzw. Kaltentstickungsverfahrens unterworfen. Hierbei wird Stickstoffmonoxid in Stickstoffdioxid umgewandelt und durch Ammoniakwasser chemisch absorbiert. Insbesondere für die Reaktion von Stickstoffmonoxid zu Stickstoffdioxid sind moderate Temperaturen (20 bis 50 °C) vorteilhaft. Üblicherweise beträgt das Verhältnis von Stickoxiden aus Verbrennungen 10 % Stickstoffdioxid und 90 % Stickstoffmonoxid.

Die schnellablaufenden Reaktionen zur Umsetzung von Stickstoffmonoxid und Stickstoffdioxid unter Bildung von Salpetersäure (HNOs) und Salpetriger Säure (HNO₂) benötigen einen hohen Anteil von Stickstoffdioxid. Dies wird primär durch die Oxidation von Stickstoffmonoxid mit Sauerstoff zu Stickstoffdioxid gebildet. Allerdings ist diese Reaktion im Vergleich langsamer. Hierzu schlägt der Artikel die Verwendung einer ausreichend alkalischen Lösungen vor, wodurch ein Mechanismus, der die gleichzeitige Entfernung von NO und NO₂ als eine pseudomäßige N₂O₃-Spezies in alkalischer Lösung beschreibt, genutzt werden kann. Hierbei entsteht Ammoniumnitrit, welches in wässrigen alkalischen Lösungen stabil ist und erst durch eine ausreichend hohe Temperatur in Stickstoff umgewandelt werden kann.

Für die Überwachung und Regelung des pH-Werts, um eine ausreichende Alkalität der Lösung zu gewährleisten und die Zersetzung von Ammoniumnitrit in Stickstoff zu ermöglichen, wird ein Nitrit-Reduktionsreaktor verwendet. Die Entfernung von Stickoxiden ist mit zunehmendem Druck effektiver. Daher wurde ein maximaler relativer Druck von 27 barg (bar Überdruck) vorgeschlagen.

Bei dem soeben besprochenen Verfahren ergeben sich die zuvor beschriebenen Limitationen, die mit dem hier vorgeschlagenen Verfahren und seinen Ausgestaltungen überwunden werden können. Wie erwähnt, kommt dabei eine katalytische Oxidation zum Einsatz.

Aus dem Stand der Technik sind beispielsweise die Artikel "Catalytic oxidation of NO with O2 over FeMnOx/TiO2: Effect of iron and manganese oxides loading sequences and the catalytic mechanism study" von M. Zhang et al., Applied Surface Science 300 (2014) 58-65, sowie "Catalytic oxidation of NO to NO2 for nitric acid production over a Pt/Al2O3 catalyst" von A. Rauf Salman et al., Applied Catalysis 564 (2018) 142-146, bekannt. Bei der katalytischen Oxidation werden zwei Moleküle Stickstoffmonoxid mit einem Molekül Sauerstoff zu zwei Molekülen Stickstoffdioxid umgesetzt. Dem Fachmann sind weitere Verfahren zur katalytischen Oxidation bekannt.

Vorliegend bezeichnet der Begriff "Abgase" Gasemissionen, die aus Verbrennungsprozessen resultieren. Abgas kann als Ausgangsgas für ein Abgasbehandlungsverfahren verstanden werden. Alternativ kann Abgas auch als das aus dem Abgasbehandlungsverfahren resultierende Gas verstanden werden, insbesondere ein nach einer Kohlendioxidverflüssigung resultierendes Restgas.

In Figur 1 ist eine Anlage 13 umfassend eine Wärmeübertragungseinrichtung 7 in Form eines Kreuzwärmetauschers, eine im dargestellten Beispiel elektrisch betriebene Vorwärmeinrichtung 6, einen Festbettreaktor 5 zur katalytischen Oxidation und einen Gaswäscher 8 zur oxidativen Gaswäsche 8, dem ein Kühler 9 und eine Umwälzpumpe 10 zugeordnet ist, sowie eine Verflüssigungseinrichtung 12, gezeigt.

Ein Ausgangsgas 2 wird über die Wärmeübertragungseinrichtung 7 vorgewärmt und die Vorwärmeinrichtung 6 erwärmt das Ausgangsgas 2 auf eine für die katalytische Oxidation gewünschte Temperatur. Anschließend erfolgt die katalytische Oxidation in dem Festbettreaktor 5, bei der Stickstoffmonoxid mittels Sauerstoff zu Stickstoffdioxid umgesetzt wird. Zur katalytischen Oxidation wird der Festbettreaktor 5 mit einem oxidativ wirkenden Katalysator, insbesondere in Form eines Pt/Al₂O₃-Katalysators, verwendet. Aus dieser exothermen Reaktion resultiert ein mit Stickstoffdioxid angereichertes Gas 3. Um einen gewünschten Anteil von Stickstoffdioxid bereitzustellen, wird die katalytische Oxidation in einem Temperaturbereich von 40 bis 400 °C, bei einem Druck von 10 bis 25 bar und einem Sauerstoffanteil von 0,5 bis 6 Vol.-% durchgeführt.

Durch die Wärmeübertragungseinrichtung 7 wird Energie des angereicherten Gases 3 in Form von Wärme an das Ausgangsgas 2 abgegeben.

Das angereicherte Gas 3 wird nach dem Durchströmen der Wärmeübertragungseinrichtung 7 zur oxidativen Gaswäsche 8 in den Gaswäscher 8 geleitet. Bei der oxidativen Gaswäsche 8 werden die Stickoxide mittels einer wässrigen alkalischen Lösung absorptiv entfernt. Bevorzugt wird hierbei eine wässrige alkalische Lösung aus Ammoniak genutzt. Für die Absorptionsreaktion ist maßgeblich Stickstoffdioxid verantwortlich, wobei die Absorptionsreaktion im Vergleich zur Oxidation schneller abläuft. Ein ausreichend hoher Anteil von Stickstoffdioxid ist somit vorteilhart, um eine hohe Auswaschrate zu erreichen. Folglich wirkt sich die vorgelagerte katalytische Oxidation 5 vorteilhaft auf die oxidative Gaswäsche 8 aus, wobei eine hohe katalytische Oxidation 5, sprich ein hoher Anteil von Stickstoffdioxid am Gesamtanteil der Stickoxide, eine hohe Auswaschrate begünstigt.

Die oxidative Gaswäsche 8 wird in einem Temperaturbereich von 10 bis 50 °C und bei einem Druck von 10 bis 25 bar durchgeführt; dies führt zu einer vorteilhaften Auswaschrate und ist energetisch vorteilhaft. Um die Temperatur im Gaswäscher 8 zu regeln, weist die Anlage den Kühler 9 auf, durch welchen Absorptionsflüssigkeit mittels der Umwälzpumpe 10 gepumpt wird. Letztere lässt das Kühlmedium im Kühlkreislauf zirkulieren, sodass die Temperatur der oxidativen Gaswäsche 8 in einem gewünschten Temperaturbereich abläuft. Denkbar sind auch andere Kühlkreisläufe.

Da die katalytische Oxidation 5 über ein weiten Temperaturbereich erfolgen kann, ist die Kühlung in der Lage, trotz variabler Eingangstemperaturen des angereicherten Gases 3 in den Gaswäscher 8, eine konstant vorteilhafte Temperatur für die oxidative Gaswäsche 8 bereitzustellen.

Ein auf diese Weise gewaschenes Gas 4 wird unter Erhalt von Kohlenstoffdioxid 15 und eines Abgases 11 der Verflüssigung 12 unterworfen. Das Abgas 11 wird zumindest teilweise dem Ausgangsgas 2 beigemischt. Das Abgas 11 ist mit Sauerstoff angereichert. Dies wirkt sich vorteilhaft auf die katalytische Oxidation 5 aus, bei der Sauerstoff als Katalysator fungiert. Das Abgas 11 wird stromauf der Wärmeübertragungseinrichtung 7 und der Vorwärmung 6 dem Ausgangsgas 2 beigemischt.

## Patentansprüche

1. Verfahren zur Entfernung von Stickoxiden aus einem Gas, umfassend
- Bereitstellen eines Stickoxide enthaltenden Ausgangsgases (2)
- Unterwerfen des Ausgangsgases (2) einer katalytischen Oxidation (5) unter Erhalt eines an Stickstoffdioxid angereicherten Gases (3), wobei bei der katalytischen Oxidation Stickstoffmonoxid zu Stickstoffdioxid umgesetzt wird; und
- Unterwerfen des angereicherten Gases (3) einer oxidativen Gaswäsche (8) unter Erhalt eines gewaschenen Gases (4) .

2. Verfahren gemäß Anspruch 1, wobei das Verhältnis von Stickstoffdioxid zu Stickoxid im angereicherten Gas (3) 20 bis 50 % beträgt.

3. Verfahren gemäß einem der vorherigen Ansprüche, wobei die katalytische Oxidation (5) in einem Temperaturbereich von 40 bis 400 °C, bei einem Druck von 10 bis 25 bar und einem Sauerstoffanteil von 0,5 bis 6 Vol.-% durchgeführt wird.

4. Verfahren gemäß einem der vorherigen Ansprüche, wobei zur katalytischen Oxidation (5) ein Festbettreaktor (5) mit einem oxidativ wirkenden Katalysator verwendet wird.

5. Verfahren gemäß einem der vorherigen Ansprüche, wobei die oxidative Gaswäsche (8) in einem Temperaturbereich von 10 bis 50 °C und bei einem Druck von 10 bis 25 bar durchgeführt wird.

6. Verfahren gemäß einem der vorherigen Ansprüche, wobei für die oxidative Gaswäsche (8) eine wässrige alkalische Lösung verwendet wird.

7. Verfahren gemäß einem der vorherigen Ansprüche, wobei das Ausgangsgas (2) durch eine Vorwärmung (6) erwärmt wird.

8. Verfahren gemäß einem der vorherigen Ansprüche, wobei das angereicherte Gas (3) in eine Wärmeübertragungseinrichtung (7) eingespeist und gekühlt wird und das Ausgangsgases (2) durch die Wärmeübertragungseinrichtung (7) erwärmt wird.

9. Verfahren gemäß einem der vorherigen Ansprüche, wobei eine Temperatur zur Durchführung der oxidativen Gaswäsche (8) unter Verwendung einer direkten und/oder indirekten Kühlung regelbar ist.

10. Verfahren gemäß einem der vorherigen Ansprüche, wobei das gewaschene Gas (4) unter Erhalt von Kohlenstoffdioxid und eines Abgases (11) einer Verflüssigung (12) unterworfen wird, wobei das Abgas (11) oder ein Teil hiervor dem Ausgangsgas (2) beigemischt wird.

11. Anlage (13) zur Entfernung von Stickoxiden aus einem Gas, die dazu eingerichtet ist,
ein Stickoxide enthaltendes Ausgangsgas (2) bereitzustellen und unter Erhalt eines Stickstoffdioxid angereicherten Gases (3) einer katalytischen Oxidation (5) zu unterwerfen, bei der Stickstoffmonoxid zu Stickstoffdioxid umgesetzt wird; und
das angereicherte Gas (3) unter Erhalt eines gewaschenen Gases (4) einer oxidativen Gaswäsche (8) zu unterwerfen.

12. Anlage (13) nach Anspruch 11, die zur Durchführung eines Verfahrens nach einem der Ansprüche 1 bis 10 eingerichtet ist.
